# FASCICULE DE BREVET EUROPEEN

(11) **EP 3 610 161 B1**
(45) Date de publication et mention de la délivrance du brevet: **07.10.2020**
(21) Numéro de dépôt: 18715228.5
(22) Date de dépôt: 23.03.2018
(51) Int. Cl.: F16B 5/06, F16B 21/08

(54) **ATTACHE ERGONOMIQUE MUNIE D'UN PIED D'ENCLIQUETAGE ET D'UN COLLET DE COMPRESSION**
MIT SCHNAPPVERSCHLUSSBEIN UND KOMPRESSIONSKRAGEN AUSGESTATTETES ERGONOMISCHES BEFESTIGUNGSELEMENT
ERGONOMIC FASTENER PROVIDED WITH A SNAP-FITTING LEG AND A COMPRESSION COLLAR

(30) Priorité: 10.04.2017 FR 1753124
(43) Date de publication de la demande: 19.02.2020
(73) Titulaire: A Raymond Et Cie, 38000 Grenoble (FR)
(72) Inventeur: POUZOLS, Virginie, 68330 Huningue (FR); PAULIN, Grégory, 38400 Saint Martin D'Heres (FR); VONIEZ, Jimmy, 38000 Grenoble (FR)
(74) Mandataire: IP Trust
(86) Numéro de dépôt international: PCT/FR2018/050709
(87) Numéro de publication internationale: WO 2018/189444

(56) Documents cités:
- EP-A1- 0 735 285
- EP-A1- 1 403 534
- EP-A2- 1 895 171
- WO-A1-2012/058215
- DE-A1- 4 404 746
- DE-U1- 29 708 112
- FR-A- 1 574 874
- FR-A1- 2 938 310
- GB-A- 2 424 461
- US-A- 5 647 713
- US-A- 5 857 244

## Description

### DOMAINE DE L'INVENTION

La présente invention concerne d'une manière générale une attache destinée à être fixée sur un support. L'attache peut être employée pour la fixation d'un élément à ce support.

### ARRIERE PLAN TECHNOLOGIQUE DE L'INVENTION

On connaît par exemple des documents FR2944569,FR1183128, US5647713, EP0735285, DE29708112 et DE4404746 de telles attaches comprenant une tête qui peut servir à recevoir l'élément à fixer. Ces attaches comprennent aussi un pied d'encliquetage destiné à pénétrer dans un orifice formé dans le support pour y maintenir fixement l'attache. Les attaches décrites dans ces documents comprennent également un collet de compression, tronconique et déformable élastiquement, parfois également désignée par le terme « parapluie », relié à la tête de l'attache au niveau d'une zone de liaison, et dont la concavité est orientée vers le support. Le collet de compression permet de rattraper les jeux pouvant exister dans l'emboîtement entre le pied d'encliquetage et le support, ces jeux pouvant être notamment liés à la variabilité des épaisseurs des supports sur lesquels les attaches sont destinées à être fixées.

L'insertion d'une telle attache dans l'orifice du support est permise par la déformation d'ailes flexibles du pied d'encliquetage. L'insertion conduit à mettre en contact le contour périphérique du collet de compression avec le support avant que les ailes flexibles n'aient complètement traversé ce support. L'effort axial appliqué sur la tête de l'attache lors de son insertion provoque la flexion du collet de compression de manière à permettre au pied d'encliquetage de traverser entièrement l'épaisseur du support et de libérer les ailes flexibles. L'attache est alors fermement fixée sur le support, la déformation élastique du collet de compression conduisant à mettre en contact forcé le pied d'encliquetage avec une face du support. La flexion du collet de compression est obtenue par son écrasement progressif ou par pliage autour d'une zone de flexion localisée au niveau de la zone de liaison.

La déformation du collet de compression au cours et à l'issue de la fixation de l'attache est dépendante de l'épaisseur du support. Une épaisseur relativement faible ne nécessite qu'un déplacement axial relativement limité de l'attache pour permettre l'engagement des ailes flexibles à travers l'orifice du support. Dans ce cas, le collet de compression est faiblement déformé une fois l'attache fixée. Une épaisseur relativement importante du support nécessite au contraire un déplacement axial de plus grande ampleur de l'attache, jusqu'à une limite de butée pour laquelle le collet de compression est en contact planaire avec le support.

L'effort axial qui est imparti à l'attache lors de sa fixation au support correspond sensiblement à l'effort de compression ou de rappel du collet de compression. Dans les attaches de l'état de la technique, cet effort de compression est généralement croissant avec le déplacement axial de l'attache. Lorsque le support est relativement épais, et qu'il est donc nécessaire de déplacer l'attache jusqu'à sa butée ou proche de celle-ci, les efforts importants qui doivent être appliqués rendent la fixation de l'attache peu ergonomique. Par exemple, il peut parfois être nécessaire d'employer un outil de manière à permettre l'application d'une force suffisante pour permettre l'engagement des ailes flexibles à travers l'orifice du support.

La présente invention vise à pallier tout ou partie de l'inconvénient précité. La présente invention vise notamment à proposer une attache ergonomique qui limite les efforts axiaux appliqués même lorsqu'il est nécessaire de déplacer l'attache à proximité de sa butée. Elle vise également, dans certains modes de réalisation, à proposer une attache pour laquelle les efforts appliqués sont sensiblement constants sur une large portion de sa course lors de sa fixation.

### BREVE DESCRIPTION DE L'INVENTION

En vue de la réalisation de l'un de ces buts, l'objet de l'invention propose une attache pour fixer un élément à un support, l'attache comportant un pied de fixation destiné à traverser un orifice aménagé dans le support sous l'effet d'un effort axial de compression, et comportant une tête et un collet de compression tronconique et élastiquement déformable destiné à prendre appui, en compression, sur le support et relié à la tête au niveau d'une zone de liaison.

Selon l'invention, le collet de compression comporte une première zone périphérique de flexion du collet et au moins une deuxième zone périphérique de flexion, la première et la seconde zone de flexion présentant une épaisseur moindre que les zones du collet (7a, 7b) qui leurs sont contiguës pour les rendre moins rigide et pour se déformer de manière privilégiée lorsque l'attache est soumise à l'effort axial de compression.

Selon d'autres caractéristiques avantageuses et non limitatives de l'invention, prises seules ou selon toute combinaison techniquement réalisable :
- la tête repose sur le sommet du collet de compression ;
- le collet présente un contour de section transversale circulaire ;
- le collet présente un contour de section transversale composé d'une pluralité de portions ;
- la deuxième zone de flexion est située à mi- rayon du collet ;
- la première zone de flexion est située au niveau de la zone de liaison ;
- le pied de fixation porte un mécanisme d'emboîtage élastique ;
- le pied de fixation est un pied d'encliquetage comprenant une pluralité d'ailes flexibles.

### BREVE DESCRIPTION DES DESSINS

D'autres caractéristiques et avantages de l'invention ressortiront de la description détaillée de l'invention qui va suivre en référence aux figures annexées sur lesquels :
- La figure 1 représente une attache conforme à l'invention ;
- la figure 2 représente une vue du dessus du collet de l'attache de la figure 1 ;
- les figures 3a à 3c illustrent le principe de fonctionnement d'une attache conforme à l'invention ;
- la figure 4 représente le profil radial d'épaisseur du collet selon un mode de mise en œuvre particulier de l'invention ;
- La figure 5 représente la relation force de compression/déplacement d'une attache dont le profil est sensiblement conforme à celle de la figure 4.

### DESCRIPTION DETAILLEE DE L'INVENTION

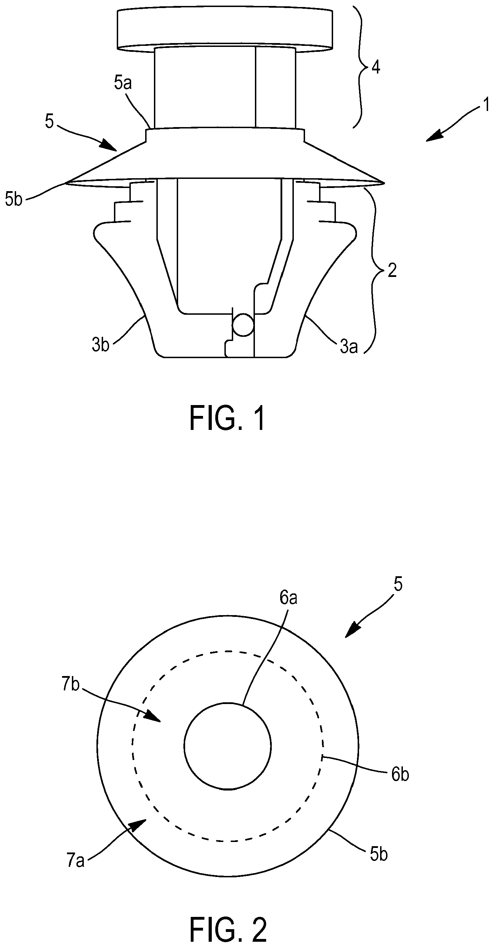

La figure 1 représente une attache 1 conforme à l'invention. Elle comporte un pied de fixation prenant la forme, sur l'exemple représenté, d'un pied d'encliquetage 2, comprenant deux ailes flexibles 3a, 3b susceptibles de se déformer lorsque l'attache 1 est insérée en force dans un orifice, par exemple cylindrique, aménagé dans un support auquel l'attache 1 doit être fixée. On note que sur l'exemple représenté sur la figure 1 les ailes flexibles 3a, 3b présentent une pluralité de crans, en escalier, permettant de faciliter l'insertion de l'attache 1 dans le support. Mais l'invention n'est nullement limitée à cette configuration particulière du pied de fixation 2. Elle est généralement compatible avec tout pied 2 portant un mécanisme de fixation de l'attache 1 au support, tel qu'un mécanisme d'emboîtage élastique, mais il peut également s'agir d'un pied « sapin » ou un pied de fixation « quart de tour ».

L'attache 1 comporte également une tête 4 qui peut constituer l'élément à fixer, ou former un dispositif de fixation de cet élément. La tête 4 et le pied 2 définissent l'axe principal de l'attache 1.

L'attache 1 comporte aussi un collet de compression tronconique et élastiquement déformable 5 (et plus simplement désigné par « collet » dans la suite de cette description). Le collet 5 est destiné à venir prendre appui, en compression, sur une face du support afin de placer en contact forcé les ailes du pied d'encliquetage 2 sur la face opposée du support. On rattrape ainsi le jeu pouvant apparaître dans le mécanisme d'emboîtage élastique porté par le pied 2 lorsque l'attache 1 est fixée au support.

Comme cela est bien visible sur la figure 1 l'intérieur de la concavité du collet 5 est orienté vers le pied 3. La tête 4 de l'attache 1 repose sur le sommet du collet 5. Le collet 5 est solidaire de la tête 4 au niveau d'une zone de liaison 5a périphérique.

Dans l'exemple représenté sur la figure 1, le contour d'une section transversale du collet 5 (c'est à dire d'une section selon un plan parallèle au support) est circulaire, et présente une symétrie de révolution complète. Mais l'invention n'est nullement limitée à cette configuration et on pourrait envisager un collet tronconique 5 présentant une section transversale de toute autre forme, régulière ou non, par exemple carrée ou rectangulaire. On pourrait également envisager un collet 5 tronconique présentant une symétrie de révolution incomplète, et dont la section transversale serait composée d'une pluralité de portions de cercle, de carré ou de rectangle.

L'attache 1 est constituée d'un matériau rigide, par exemple de matière plastique, et avantageusement formée d'une seule pièce. Elle peut être formée par exemple par injection.

Un effort axial appliqué sur l'attache 1, c'est-à-dire un effort appliqué selon l'axe principal de l'attache 1, permet l'insertion du pied de fixation 2 à travers l'orifice de support. Il conduit à mettre en contact le contour extérieur périphérique 5b du collet 5 avec un côté du support. L'effort axial, s'il est maintenu et suffisant, conduit à la flexion et à la mise en compression du collet 5 pour permettre l'insertion complète du pied 2 dans l'orifice du support et autoriser le déploiement des ailes flexibles 3a, 3b de l'autre côté du support.

Le collet 5 comprend au moins deux zones de flexion 6a, 6b. Par « zone de flexion », on désigne une zone périphérique du collet 5 autour de laquelle le collet est susceptible de plier lorsqu'il repose sur le support et qu'un effort axial de compression est appliqué à l'attache 1. Une zone de flexion est une zone périphérique du collet 5 présentant une rigidité moindre que les autres zones périphériques du collet 5, elle est donc susceptible de se déformer de manière privilégiée lorsque l'attache 1 est soumise à l'effort axial de compression.

Une première zone de flexion 6a peut correspondre à la zone de liaison 5a reliant le collet 5 à la tête 4. Le collet 5 est configuré pour présenter également au moins une deuxième zone de flexion 6b, différente de la première zone. La première et la deuxième zone de flexion 6a, 6b sont réalisés en réduisant l'épaisseur du collet 5 en ces zones de manière à la rendre localement moins rigide.

On a ainsi représenté sur la figure 2, une vue du dessus du collet 5 de la figure 1. Sur cette figure 2, on a représenté schématiquement la première zone de flexion 6a au niveau de la zone de liaison 5a entre le collet 5 est la tête 2 de l'attache. On a également représenté la deuxième zone de flexion 6b. La deuxième zone de flexion 6b délimite une première partie périphérique extérieure 7a du collet 5 et une deuxième partie interne 7b du collet 5.

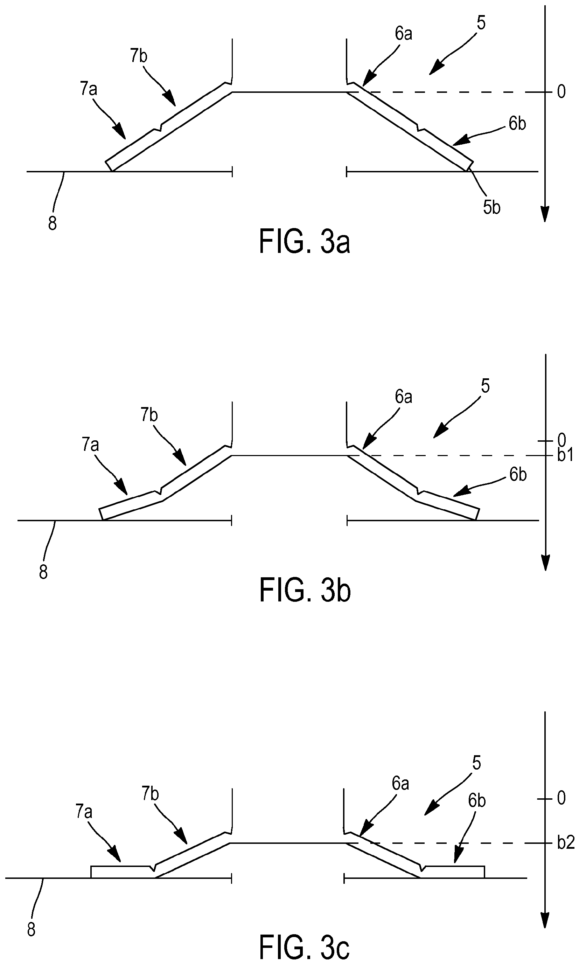

Les figures 3a à 3c illustrent le principe de fonctionnement d'une attache 1 conforme à l'invention. Pour des raisons de visibilité, on a omis sur ces figures de représenter la tête 4 et le pied 2 de l'attache 1. La première et la deuxième zone de flexion 6a, 6b ont été représentées symboliquement par des encoches, dénotant la moindre rigidité du collet 5 en ces zones.

La figure 3a représente en coupe le collet 5 lorsqu'il repose sur le support 8 sans être déformé, au niveau de son contour extérieur périphérique 5b. Par convention, on pose que cet état correspond à une distance de compression nulle et que le collet subit un effort de compression également nul.

La figure 3b représente en coupe le collet 5 à une première distance de compression h1, légèrement supérieure à zéro, en début de course de l'attache 1. La flexion du collet 5 est principalement obtenue par pliage autour de la deuxième zone d'inflexion 6b. Le bras de levier court entre la deuxième zone la flexion 6b et le contour extérieur périphérique 5b du collet 5 en contact avec le support contribue à augmenter la raideur du collet 5 en début de course. Lorsque la distance de compression augmente, on rapproche progressivement la zone périphérique extérieure 7a du collet 5 avec le support 8.

La figure 3c représente en coupe du collet 5 à une deuxième distance de compression h2, en fin de course de l'attache 1, proche de sa position de butée sur le support 8. La partie périphérique extérieure 7b est en contact avec le support 8. La flexion du collet 5 est principalement obtenue par pliage autour de la première zone de flexion 6a. Cette configuration contribue à réduire la raideur en fin de course.

Ainsi la présence sur le collet 5 d'au moins une deuxième zone de flexion 6b contribue à rendre uniforme entre le début de course et la fin de course, l'évolution de l'effort de compression avec la distance de compression.

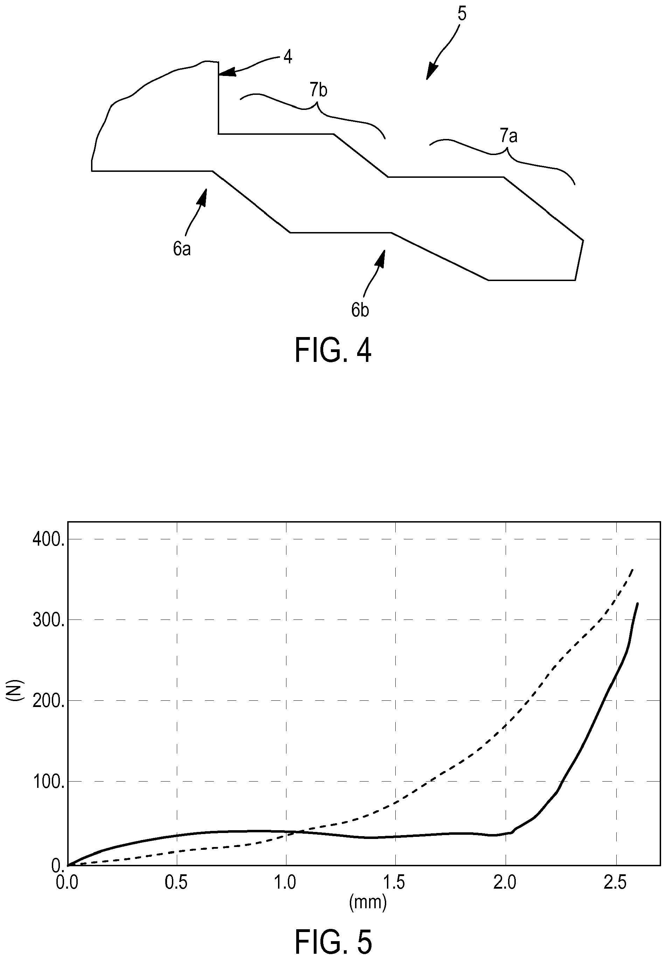

La figure 4 représente le profil radial d'épaisseur du collet 5 selon un mode de mise en œuvre particulier de l'invention. La figure 5 représente la relation force de compression/déplacement d'une attache 1 dont le profil est sensiblement conforme à celle de la figure 4 (en trait plein) et la relation typique liant la force de compression au déplacement d'une attache de l'état de la technique.

Les zones de flexion 6a, 6b présentent une épaisseur moindre que les zones du collet 7a, 7b qui leurs sont contiguës, de sorte que les zones de flexion 6a, 6b présente une rigidité moindre que ces zones contiguës. Elles forment des zones autour desquels le collet 5 se déforme de manière privilégiée, par pliage, sous l'effet de la charge.

Dans ce mode de mise en œuvre, la première zone de flexion 6a est située au niveau de la zone de liaison et la deuxième zone de flexion 6b est située sur le collet 5 à mirayon de celui-ci, c'est-à-dire que la zone externe 7a et la zone interne 7b forment des anneaux de sensiblement même largeur.

La zone périphérique externe 7a présente une épaisseur moyenne plus importante que celle de la deuxième zone de flexion 6b. Cette caractéristique assure la raideur accrue de l'attache en début de course. La combinaison de la deuxième zone de flexion 6b et de la zone périphérique externe relativement épaisse 7a participent principalement à la flexion du collet 5 en début de course et environ jusqu'à la mi-course. On observe ainsi sur la figure 5 que l'effort de compression est un peu plus important en début de course (pour des déplacements inférieurs à 1,1mm environ) dans le cas de l'attache conforme à ce mode de réalisation que dans le cas d'une attache de l'état de la technique.

La zone interne 7b peut également présenter une épaisseur moyenne supérieure à celle de la première zone de flexion 6a. L'épaisseur moindre au niveau de la première zone de flexion 6a, limite l'effort de compression en fin de course. La combinaison de la première zone de flexion 6a et de la zone interne 7b participe principalement la flexion du collet 5 dans la deuxième partie de course jusqu'à sa butée. On observe ainsi sur la figure 5 que l'effort de compression est moindre en fin de course (pour des déplacements supérieurs à 1,1mm environ) dans le cas de l'attache conforme à ce mode de réalisation que dans le cas d'une attache de l'état de la technique.

De manière avantageuse, la première zone de liaison 6a présente une rigidité supérieure à la rigidité de la deuxième zone de liaison 6b. Cela contribue à favoriser la déformation au niveau de la première zone de liaison en début de course.

On observe que le profil radial d'épaisseur du collet 5 du mode de réalisation de la figure 4 permet d'obtenir un comportement effort de compression - déplacement de compression formant un plateau sur une large portion de la course de l'attache.

Bien entendu l'invention n'est pas limitée au mode de mise en œuvre décrit et représenté notamment sur la figure 4. On pourra y apporter des variantes de réalisation sans sortir du cadre de l'invention tel que défini par les revendications. D'une manière générale, on ajustera le profil radial d'épaisseur du collet 5 pour donner à l'attache 1 un comportement force de compression - déplacement de compression désiré. L'homme du métier sera ainsi se faire aider des outils de simulation, par exemple en appliquant une méthode numérique d'approximation par éléments finis, pour définir le profil radial d'épaisseur à donner au collet 5 pour obtenir un comportement précisément attendu.

## Revendications

1. Attache (1) pour fixer un élément à un support, l'attache comportant un pied de fixation (2) destiné à traverser un orifice aménagé dans le support sous l'effet d'un effort axial de compression, et comportant une tête (4) et un collet de compression (5) tronconique et élastiquement déformable destiné à prendre appui, en compression, sur le support et relié à la tête (4) au niveau d'une zone de liaison (5a), l'attache étant **caractérisée en ce que** le collet de compression (5) comporte une première zone de flexion (6a) et au moins une deuxième zone de flexion (6b), la première et la seconde zone de flexion (6a, 6b) présentant une épaisseur moindre que les zones du collet (7a, 7b) qui leurs sont contiguës pour les rendre moins rigide et pour se déformer de manière privilégiée lorsque l'attache est soumise à l'effort axial de compression.

2. Attache (1) selon l'une des revendications précédentes dans laquelle la tête repose sur le sommet du collet de compression (5).

3. Attache (1) selon l'une des revendications précédentes dans laquelle le collet (5) présente un contour de section transversale circulaire.

4. Attache (1) selon l'une des revendications précédentes dans laquelle le collet (5) présente un contour de section transversale composé d'une pluralité de portions.

5. Attache (1) selon l'une des revendications précédentes dans laquelle la deuxième zone de flexion (6b) est située à mirayon du collet (5).

6. Attache (1) selon l'une des revendications précédentes dans laquelle la première zone de flexion (6a) est située au niveau de la zone de liaison (5a).

7. Attache (1) selon l'une des revendications précédentes dans laquelle le pied de fixation (2) porte un mécanisme d'emboîtage élastique.

8. Attache (1) selon la revendication précédente dans laquelle le pied de fixation (2) est un pied d'encliquetage comprenant une pluralité d'ailes flexibles (3a, 3b).

## Patentansprüche

1. Befestigungselement (1) zur Befestigung eines Elements an einem Träger, wobei das Befestigungselement einen Befestigungsfuß (2) aufweist, der dazu bestimmt ist, eine in dem Träger vorgesehene Öffnung unter der Wirkung einer axialen Druckkraft zu durchdringen, und einen Kopf (4) und einen kegelstumpfförmigen und elastisch verformbaren Druckkragen (5) aufweist, der dazu bestimmt ist, sich unter Druck auf dem Träger abzustützen, und der mit dem Kopf (4) in einer Verbindungszone (5a) verbunden ist, **dadurch gekennzeichnet, dass** der Druckkragen (5) eine erste Biegezone (6a) und mindestens eine zweite Biegezone (6b) aufweist, wobei die erste und die zweite Biegezone (6a, 6b) eine geringere Dicke aufweisen als die an sie angrenzenden Zonen des Kragens (7a, 7b), um sie weniger steif zu machen und sich bevorzugt zu verformen, wenn das Befestigungselement der axialen Druckkraft ausgesetzt wird.

2. Befestigungselement (1) nach einem der vorhergehenden Ansprüche, wobei der Kopf auf der Spitze des Druckkragens (5) aufliegt.

3. Befestigungselement (1) nach einem der vorhergehenden Ansprüche, wobei der Kragen (5) einen kreisförmigen Querschnittsumriss hat.

4. Befestigungselement (1) nach einem der vorhergehenden Ansprüche, wobei der Kragen (5) einen transversalen Querschnittsumriss aufweist, der aus mehreren Abschnitten zusammengesetzt ist.

5. Befestigungselement (1) nach einem der vorhergehenden Ansprüche, wobei sich die zweite Biegezone (6b) im mittleren Radius des Kragens (5) befindet.

6. Befestigungselement (1) nach einem der vorhergehenden Ansprüche, wobei sich die erste Biegezone (6a) im Bereich der Verbindungszone (5a) befindet.

7. Befestigungselement (1) nach einem der vorhergehenden Ansprüche, wobei der Befestigungsfuß (2) einen elastischen Rastmechanismus enthält.

8. Befestigungselement (1) nach dem vorhergehenden Anspruch, wobei der Befestigungsfuß (2) ein Schnappverschlussbein ist, das eine Vielzahl flexibler Flügel (3a, 3b) umfasst.

## Claims

1. Fastener (1) for attaching an element to a support, the fastener comprising an attachment foot (2) for passing through a hole made in the support under the effect of an axial compressive force, and comprising a head (4) and a frustoconical and elastically deformable compression collar (5) which is intended for engaging, in compression, the support and is connected to the head (4) in a connection region (5a), the fastener being **characterized in that** the compression collar (5) comprises a first bending region (6a) and at least one second bending region (6b), the first and the second bending region (6a, 6b) having a thickness less than the adjacent regions of the collar (7a, 7b) in order to make said bending regions less rigid and in order to be deformed in a preferred manner when the fastener is subjected to the axial compressive force.

2. Fastener (1) according to the preceding claim, wherein the head rests on the top of the compression collar (5).

3. Fastener (1) according to either of the preceding claims, wherein the collar (5) has a circular cross-sectional contour.

4. Fastener (1) according to any of the preceding claims, wherein the collar (5) has a cross-sectional contour consisting of a plurality of portions.

5. Fastener (1) according to any of the preceding claims, wherein the second bending region (6b) is located at the mid-radius of the collar (5).

6. Fastener (1) according to any of the preceding claims, wherein the first bending region (6a) is located in the connection region (5a).

7. Fastener (1) according to any of the preceding claims, wherein the attachment foot (2) supports an elastic interlocking mechanism.

8. Fastener (1) according to the preceding claim, wherein the attachment foot (2) is a snap-in foot comprising a plurality of flexible wings (3a, 3b).
